# EUROPÄISCHE PATENTSCHRIFT

(11) **EP 1 233 193 B1**
(45) Veröffentlichungstag und Bekanntmachung des Hinweises auf die Patenterteilung: **28.06.2006**
(21) Anmeldenummer: 02000826.4
(22) Anmeldetag: 15.01.2002
(51) Int. Cl.: F16B 19/05

(54) **Schliessringbolzen zur Herstellung einer mechanisch festen und mit einer Dichtmasse abgedichteten Verbindung von zwei oder mehreren Bauteilen**
Bolt with retaining ring for obtaining a mechanically strong connection of two or more elements sealed by a sealant
Tige à bague de serrage pour l'obtention d'une liaison mécanique solide de deux pièces ou plus rendue étanche par une masse de produit

(30) Priorität: 20.02.2001 DE 10107952
(43) Veröffentlichungstag der Anmeldung: 21.08.2002
(73) Patentinhaber: Airbus Deutschland GmbH, 21129 Hamburg (DE)
(72) Erfinder: Stoewer, Udo-Henning, Dipl.-Ing., 28355 Bremen (DE); Turlach, Gerhard, Dipl.-Ing., 37520 Osterode (DE)
(74) Vertreter: Hansmann, Dierk

(56) Entgegenhaltungen:
- EP-A- 0 955 477
- GB-A- 913 759
- US-A- 3 367 228
- US-A- 3 371 572

## Beschreibung

Die Erfindung betrifft einen Schließringbolzen-Verbinder mit einem Schließringbolzen, einem Schließring and einer Dichtmasse zur Herstellung einer mechanisch festen und mit der Dichtmasse abgedichteten Verbindung von zwei oder mehreren Bauteilen, wobei der Schließringbolzen einen, fluchtende Bohrungen der Bauteile durchsetzenden Schaft mit einem an einem Ende des Schaftes befestigten sowie an einer äußeren Oberfläche eines Bauteiles anliegenden Kopf aufweist, wobei das außerhalb der zu verbindenden Bauteile liegende andere Ende des Schaftes als profilierter und entlüftender Verriegelungsbereich ausgebildet ist, der von dem Schließring zur Herstellung einer kraftschlüssigen Verbindung umgeben ist, und wobei der Schaft außerhalb des Verriegelungsbereiches über eine Sollbruchstelle mit einem Abreißteil zur Aufnahme eines Zugwerkzeuges mechanisch verbunden ist.

Ein derartiger Schließringbolzen-Verbinder ist aus der US-A-3 371 572 bekannt. Weiterhin ist in der EP 0 955 477 A1 ein Schließringbolzen beschrieben, wobei folgende Bauelemente eingeschlossen sind:
- ein Schaft zur Durchdringung und bündigen Einpassung in die Bohrungen der zu verbindenden Bauteile;
- ein Schaftkopf zur Verhinderung von Bewegungen des Schließringbolzens innerhalb der Bohrungen in Achs-Richtung;
- eine Vielzahl von ringförmigen Nuten im Verriegelungsbereich des Schaftes, der mit einem Schließring zur Herstellung einer mechanischen Verbindung des Schließringbolzens mit den Bauteilen zusammenwirkt;
- ein Zugteil, welches am Ende des Verriegelungsbereiches mit dem Schaft des Schließringbolzens verbunden ist;
- eine Sollbruchstelle, die zwischen den genannten Nuten des Verriegelungsbereichs und dem Abreißteil angeordnet ist, wobei der Abreißteil von dem Schaft losgelöst wird, wenn die Nuten des Verriegelungsbereiches mit dem Schließring gekuppelt sind; und
- ein O-Ring, der zwischen dem äußeren Ende des Schließringes und den Nuten des Verriegelungsbereiches positioniert ist, wobei der äußere Durchmesser des O-Ringes größer ausgeführt ist als der Durchmesser des Schaftes, so daß eine Beseitigung von unerwünschter Dichtmasse in der Bohrung erfolgt sowie ein ungewünschtes Entweichen von Dichtmasse aus den Nuten verhindert wird.

Bei der vorbekannten Anordnung ist es von Nachteil, daß eine Funktionsgarantie der mechanischen Verbindung bei verschmutzten Funktionsteilen nicht gegeben werden kann. Bei Verwendung eines Schließringbolzens mit ringförmigen Nuten im Verriegelungsbereich des Schaftes wird im Falle einer Verschmutzung der Funktionsteile mit Dichtmasse eine funktionsgerechte Verriegelung der Nuten mit dem Schließring behindert, da die Dichtmasse die umlaufenden Nuten auffüllt, ein hydraulischer Puffer zwischen Verriegelungsbereich des Schaftes und Schließring gebildet wird und somit der Schließring keinen ausreichenden Halt hat. Ein weiterer Nachteil ist darin zu sehen, daß durch die Verwendung des O-Ringes zusätzliche Arbeitsschritte erforderlich sind.

Der Erfindung liegt daher die Aufgabe zugrunde, einen eingangs genannten Schließringbolzen-Verbinder zu schaffen, bei dem eine ausreichende Funktionssicherheit auch und vor allem bei mit Dichtmasse verschmutztem Funktionsbereich zwischen Verriegelungsbereich des Schaftes und Schließring erzielt wird.

Die Aufgabe wird erfindungsgemäß dadurch gelöst, daß der Verriegelungsbereich des Schließringbolzens eine mit einer umlaufenden Kordelung versehene Oberfläche (sogenannter Brilliantfunktionsbereich) derart aufweist, daß bei einem durch ein am Abreißteil angreifendes Montagewerkzeug durchgeführten Fügevorgang die Dichtmasse sich an den Kordelflanken unter Vermeidung hydraulischer Puffer durch Einkapselung der Dichtmasse verteilt und daß die Dichtmasse nach der kraftschlüssigen Verriegelung durch Verformung des Schließringes als eine großflächige dünne Dichtmassenschicht eine zusätzliche Klebefunktion erfüllt.

Ausgestaltungen der Erfindung sind in den Unteransprüchen 2 und 3 beschrieben.

Ein Vorteil der Erfindung liegt darin, daß durch die Kordelung im Verriegelungsbereich ein Austritt und eine gezielte Verteilung von Dichtmasse erzielt wird. Bei einem Fügevorgang legt sich der Schließring kraftschlüssig um die Spitzen der Kordelung, wobei vorteilhafterweise der Grund zwischen der Kordelung durch den verformten Schließring nicht vollständig ausgefüllt wird. Durch die freibleibenden Spalten zwischen Kordelungsgrund und dem Schließring kann sich die Dichtmasse gleichmäßig verteilen. Es entsteht vorteilhafterweise kein hydraulischer Puffer durch Einkapselung der Dichtmasse in umlaufenden Ringnuten durch eine Verformung des Schließringes, da die im Verriegelungsbereich vorgesehene Kordelung eine Unterbrechung von umlaufenden Nuten darstellt.

In der Zeichnung ist ein Ausführungsbeispiel nach der Erfindung dargestellt, und zwar zeigt:
- Fig. 1: einen Schließringbolzen in Seitenansicht,
- Fig. 2: den aus Fig. 1 ersichtlichen Schließringbolzen mit Schließring zur Herstellung einer mechanisch festen sowie mit einer Dichtmasse abgedichteten Verbindung von zwei flächenförmigen Bauteilen vor einem Fügevorgang, und
- Fig. 3: die mechanische Verbindung gemäß Fig. 2 nach Beendigung des Fügevorganges.

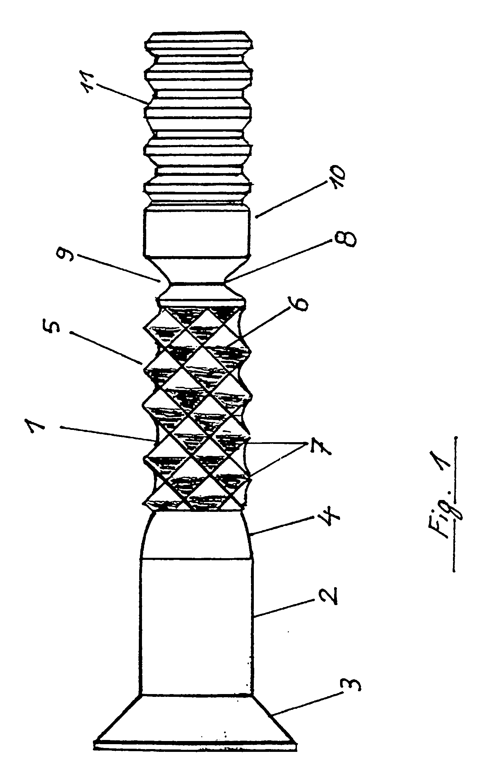

In Fig. 1 weist ein Schließringbolzen 1 einen zylinderförmigen Schaft 2 auf, der an einem Ende mit einem Senkkopf 3 mechanisch fest verbunden ist. Anstelle des Senkkopfes 3 ist die Verwendung von beispielsweise zylinderförmigen Köpfen möglich. Das andere Ende des Schaftes 2 steht über einen zweckmässigerweise konischen Ansatz 4 mit einem profilierten Verriegelungsbereich in Verbindung, dessen Profilierung durch eine umlaufende Kordelung 6 erzielt wird. Die Flanken der Kordelung sind mit 7 bezeichnet. An den Verriegelungsbereich 5 schließt sich über eine Sollbruchstelle 8, die in diesem Beispiel durch eine umlaufende Nut 9 gebildet wird, ein Abreißteil 10 zur Aufnahme eines zeichnerisch nicht dargestellten Montagewerkzeuges an. Für eine sichere Befestigung des Montagewerkzeuges an dem Abreißteil 10 des Schließringbolzens 1 ist ein Teil des Abreißteiles 10 mit vorzugsweise parallel umlaufenden Nuten 11 versehen.

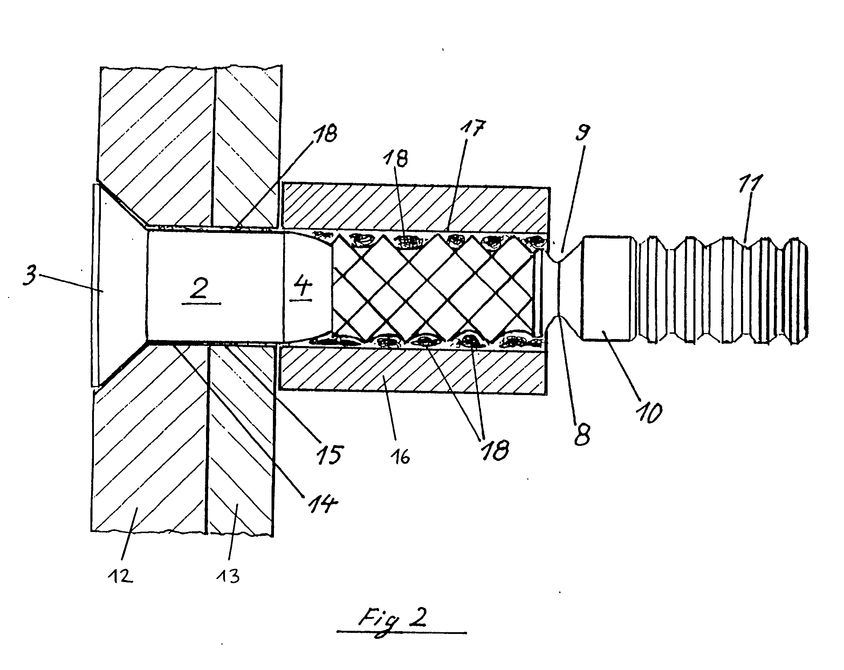

Wie aus Fig. 2 zu ersehen ist, dient der Schließringbolzen 1 zusammen mit einem zylinderförmigen Schließring 16 zur Herstellung einer mechanischen und mit einer Dichtmasse 18 abgedichteten Verbindung von zwei vorzugsweise flächenförmigen Bauteilen 12 und 13. Diese Bauteile, die mit jeweils einer ihrer Flächen direkt benachbart zueinander angeordnet sind, besitzen je eine Paßbohrung 14 bzw. 15, welche zur Aufnahme des Schaftes 2 des Schließringbolzens 1 zueinander fluchtend angeordnet sind. Der Schließringbolzen 1 durchdringt die Paßbohrungen derart, daß sein Senkkopf 3 mit der äußeren Fläche des Bauteiles 12 direkt bündig abschließt sowie mit seinem konischen Ansatz 4, seinem Verriegelungsbereich 5 mit Kordelung 6, seiner Sollbruchstelle 8 und seinem Abreißteil 10 mit umlaufenden Nuten 11 über die äußere Fläche des zweiten Bauteiles 13 hinausragt. Der konische Ansatz 4 sowie der Verriegelungsbereich 5 mit Kordelung 6 sind von dem zylinderförmigen Schließring 16 umgeben, dessen Bohrung 17 diese Bauelemente aufnimmt. Zwecks Herstellung einer abgedichteten Verbindung der Bauteile 12 und 13 ist der zylinderförmige Schaft 2 des Schließringbolzens 1 zusammen mit einer Dichtmasse 18 in die Paßbohrungen 14 und 15 der Bauteile 12 und 13 eingesetzt worden. Bei diesem sogenannten Naßzusammenbau treten Verschmutzungen in Form von Ablagerungen der Dichtmasse 18 an der Kordelung 6 auf, insbesondere in den zwischen den Flanken 7 vorhandenen Zwischenräumen.

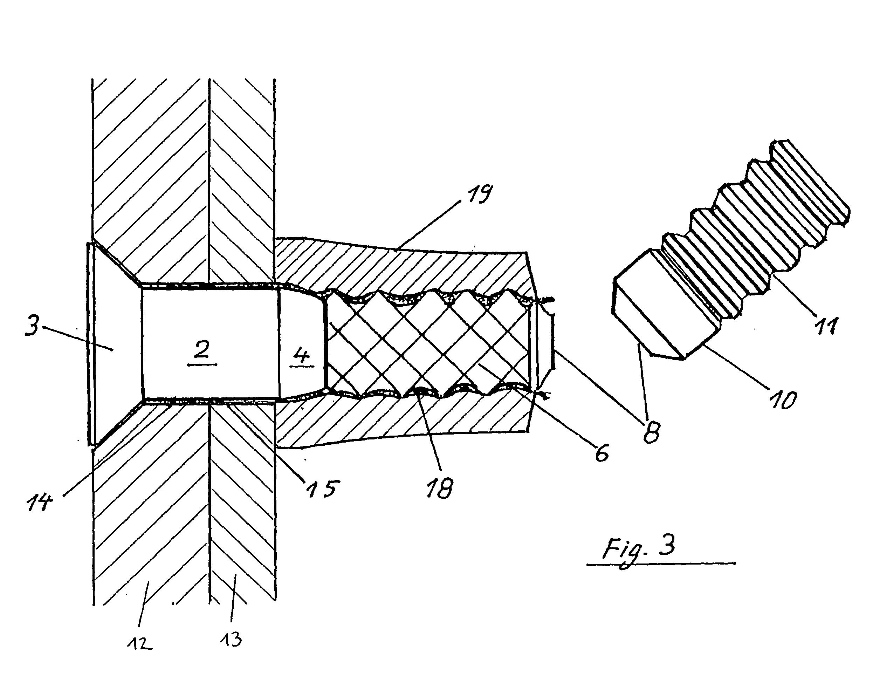

In Fig. 3 ist die mechanisch feste und abgedichtete Verbindung der Bauteile 12 und 13 nach Beendigung eines Fügevorganges dargestellt. Hierzu ist der Schließring 16 von einem zeichnerisch nicht darstellten Montagewerkzeug, welches zur Durchführung des Fügevorganges auf der Abreißteil 10 aufgesetzt wird und auf den Schließring 16 eine Druckbelastung ausübt, derart verformt worden, daß eine kraftschlüssige Verriegelung zwischen dem Verriegelungsbereich 5 und dem verformten Schließring 19 entsteht. Gleichzeitig erfolgt bei diesem Vorgang eine Verteilung der innerhalb der Schließringbohrung 17 vorhandenen Dichtmasse 18 an den Kordelflanken 7, wobei eine großflächige dünne Dichtmassenschicht entsteht, die eine zusätzliche Klebefunktion erfüllt. Wie weiterhin der Fig. 3 zu entnehmen ist, wird nach Beendigung des Fügevorganges mit Hilfe des Montagewerkzeuges der Abreißteil 10 über die Sollbruchstelle 8 von dem Verriegelungsbereich 5 des Schließringbolzens 1 abgetrennt.

### Bezugszeichenliste

- 1: Schließringbolzen
- 2: zylinderförmiger Schaft des Schließringbolzens 1
- 3: Senkkopf des Schließringbolzens 1
- 4: konischer Ansatz des Schließringbolzens 1
- 5: Verriegelungsbereich des Schließringbolzens 1
- 6: Kordelung des Verriegelungsbereiches 5
- 7: Flanken der Kordelung 6
- 8: Sollbruchstelle
- 9: umlaufende Nut als Sollbruchstelle 8

- 10: Abreißteil des Schließringbolzens 1
- 11: umlaufende Nuten des Abreißteiles 10
- 12: erstes flächenförmiges Bauteil
- 13: zweites flächenförmiges Bauteil
- 14: Paßbohrung des ersten flächenförmigen Bauteils 12
- 15: Paßbohrung des zweiten flächenförmigen Bauteils 13
- 16: Schließring
- 17: Bohrung des Schließringes 16
- 18: Dichtmasse
- 19: verformter Schließring

## Patentansprüche

1. Schließringbolzen-Verbinder mit einem Schließringbolzen (1), einem Schließring (16,19) und einer Dichtmasse (18) zur Herstellung einer mechanisch festen und mit der Dichtmasse abgedichteten Verbindung von zwei oder mehreren Bauteilen (12,13), wobei der Schließringbolzen einen, fluchtende Bohrungen der Bauteile durchsetzenden Schaft mit einem an einem Ende des Schaftes befestigten sowie an einer äußeren Oberfläche eines Bauteiles anliegenden Kopf aufweist, wobei das außerhalb der zu verbindenden Bauteile liegende andere Ende des Schaftes als profilierter und entlüftender Verriegelungsbereich ausgebildet ist, der von dem Schließring zur Herstellung einer kraftschlüssigen Verbindung umgeben ist, und wobei der Schaft außerhalb des Verriegelungsbereiches über eine Sollbruchstelle mit einem Abreissteil (10) zur Aufnahme eines Montagewerkzeuges mechanisch verbunden ist, **dadurch gekennzeichnet, dass** der Verriegelungsbereich (5) des Schließringbolzens (1) eine mit einer umlaufenden Kordelung (6) versehene Oberfläche derart aufweist, dass bei einem durch ein am Abreißteil (10) angreifendes Montagewerkzeug durchgeführten Fügevorgang die Dichtmasse (18) sich an den Kordelflanken (7) unter Vermeidung hydraulischer Puffer durch Einkapselung der Dichtmasse verteilt; und dass die Dichtmasse (18) nach einer kraftschlüssigen Verriegelung durch Verformung des Schließringes (16) als eine großflächige dünne Dichtmassenschicht eine zusätzliche Klebefunktion erfüllt.

2. Schließringbolzen nach Anspruch 1, **dadurch gekennzeichnet, dass** zwischen dem Verriegelungsbereich (5) und dem Abreissteil (10) eine umlaufende Nut (9) als Sollbruchstelle (8) eingearbeitet ist.

3. Schließringbolzen nach Anspruch 1 oder 2, **dadurch gekennzeichnet, dass** der Abreißteil (10) des Schließringbolzens (1) parallel umlaufende Nuten (11) zur mechanischen Befestigung des Zugwerkzeuges aufweist.

## Claims

1. Retaining ring bolt connector with a retaining ring bolt (1), a retaining ring (16, 19) and a jointing compound (18) for producing a mechanically strong joint, sealed by the jointing compound, of two or more components (12, 13), the retaining ring bolt having a shaft passing through aligned holes of the components, with a head attached to one end of the shaft and lying close to an outer surface of a component, the other end of the shaft lying outside the components to be joined being formed as a contoured and deaerating locking area, which is enclosed by the retaining ring to produce a frictional connection, and the shaft outside the locking area being connected mechanically via a predetermined breaking point to a breaking part (10) for taking up an assembly tool, **characterized in that** the locking area (5) of the retaining ring bolt (1) has a surface provided with circumferential knurling (6) such that in the case of a jointing process executed by an assembly tool being applied to the breaking part (10), the jointing compound (18) is distributed on the knurled flanks (7) avoiding a hydraulic buffer due to encapsulation of the jointing compound; and that the jointing compound (18) following frictional locking due to deformation of the retaining ring (16) fulfils an additional adhesive function as a large-area thin layer of jointing compound.

2. Retaining ring bolt according to claim 1, **characterized in that** between the locking area (5) and the breaking part (10) a circumferential groove (9) is recessed in as a predetermined breaking point (8).

3. Retaining ring bolt according to claim 1 or 2, **characterized in that** the breaking part (10) of the retaining ring bolt (1) has parallel circumferential grooves (11) for the mechanical fastening of the pulling tool.

## Revendications

1. Moyen de liaison avec rivet à bague à sertir, avec un rivet à bague à sertir (1), une bague à sertir (16, 19) et une masse d'étanchéité (18) pour réaliser une liaison mécaniquement solide et étanchée par la masse d'étanchéité entre deux ou plusieurs éléments structurels (12, 13), le rivet à bague à sertir comportant une tige qui traverse des trous alignés des éléments structurels et qui est pourvue d'une tête fixée à une extrémité de la tige et appliquée contre une surface extérieure d'un élément structurel, l'autre extrémité de la tige située à l'extérieur des éléments structurels à relier étant conformée en zone profilée de verrouillage et d'évacuation d'air qui est entourée par la bague à sertir pour réaliser une liaison par conjugaison de forces et, à l'extérieur de la zone de verrouillage, la tige étant reliée mécaniquement par l'intermédiaire d'un emplacement de rupture imposée à une partie à casser (10) destinée à recevoir un outil de pose, **caractérisé en ce que** la tige de verrouillage (5) du rivet à bague à sertir (1) comporte une surface pourvue d'un moletage périphérique (6), de façon que, lors d'une opération d'assemblage réalisée à l'aide d'un outil de pose agissant sur la partie à casser (10), la masse d'étanchéité (18) se répartisse sur les flancs du moletage (7) en évitant les tampons hydrauliques par encapsulage de la masse d'étanchéité, et **en ce que**, après verrouillage par conjugaison de forces obtenu par déformation de la bague à sertir (16), la masse d'étanchéité (18) remplit une fonction supplémentaire adhésive sous la forme d'une couche de masse d'étanchéité mince à grande surface.

2. Rivet à bague à sertir selon la revendication 1, **caractérisé en ce qu'**entre la zone de verrouillage (5) et la partie à casser (10) est ménagée une rainure périphérique (9) faisant fonction d'emplacement de rupture imposée (8).

3. Rivet à bague à sertir selon la revendication 1 ou 2, **caractérisé en ce que** la partie à casser (10) du rivet à bague à sertir (1) est pourvue de rainures périphériques parallèles (11) pour la fixation mécanique de l'outil de traction.
